# EUROPEAN PATENT SPECIFICATION

(11) **EP 1 737 871 B1**
(45) Date of publication and mention of the grant of the patent: **10.10.2012**
(21) Application number: 05712179.0
(22) Date of filing: 28.01.2005
(51) Int. Cl.: C07F 5/04, C07C 69/76, C01B 6/17

(54) **METHODS OF SYNTHESIS OF ISOTOPICALLY ENRICHED BOROHYDRIDE AND METHODS OF SYNTHESIS OF ISOTOPICALLY ENRICHED BORANES**
VERFAHREN ZUR SYNTHESE VON ISOTOPISCH ANGEREICHERTEM BORHYDRID UND VERFAHREN ZUR SYNTHESE VON ISOTOPISCH ANGEREICHERTEN BORANEN
PROCEDES DE SYNTHESE DE BOROHYDRURE ET BORANES ENRICHIS DE MANIERE ISOTOPE

(30) Priority: 30.01.2004 US 540934 P
(43) Date of publication of application: 03.01.2007
(73) Proprietor: Semequip, Inc., Billerica, Massachusetts, 01862 (US)
(72) Inventor: SPIELVOGEL, Bernard, Hubbards, Nova Scotia B0Y 1T0 (CA); COOK, Kevin, Hammonds Plains, Nova Scotia B4B 1S5 (CA)
(74) Representative: Forstmeyer, Dietmar
(86) International application number: PCT/US2005/002629
(87) International publication number: WO 2005/074531

(56) References cited:
- WO-A1-94/06737
- US-A- 4 115 521
- US-A- 4 153 672
- US-A- 4 209 510
- US-A- 4 709 083
- US-A- 5 280 119
- US-A- 6 086 837
- DATABASE CA [Online] CHEMICAL ABSTRACTS SERVICE, COLUMBUS, OHIO, US; MACHACEK, JIRI ET AL: "Sodium tetrahydroborate containing boron-10" XP002517776 retrieved from STN Database accession no. 1987:52733 & CS 229 336 B1 (CZECH.) 18 June 1984 (1984-06-18)

## Description

### BACKGROUND

### 1. Field of the Invention.

The invention provides new methods for synthesis of isotopically enriched borohydride compounds and methods of preparing isotopically enriched neutral or anionic boranes using isotopically enriched borohydride prepared by the methods of the invention as an intermediate. More particularly, the present invention provides improved methods of synthesis of isotopically enriched metal borohydrides from isotopically enriched boric acid and methods of synthesis of isotopically enriched neutral or anionic boranes having between 5 and 96 boron atoms, which methods comprise preparing an isotopically enriched metal borohydride as an intermediate in the preparation of the neutral or anionic borane.

### 2. Background.

Large boron hydride compounds have become important feed stocks for boron doped P-type impurity regions in semiconductor manufacture. More particularly, high molecular weight boron hydride compounds, e.g., boron hydride compounds comprising at least a five (5) boron atom cluster, are preferred boron atom feed stocks for boron atom implantation.

An important aspect of modem semiconductor technology is the continuous development of smaller and faster devices. This process is called *scaling.* Scaling is driven by continuous advances in lithographic process methods, allowing the definition of smaller and smaller features in the semiconductor substrate which contains the integrated circuits. A generally accepted scaling theory has been developed to guide chip manufacturers in the appropriate resize of all aspects of the semiconductor device design at the same time, i.e., at each technology or scaling node. The greatest impact of scaling on ion implantation processes is the scaling of junction depths, which requires increasingly shallow junctions as the device dimensions are decreased. This requirement for increasingly shallow junctions as integrated circuit technology scales translates into the following requirement: ion implantation energies must be reduced with each scaling step. The extremely shallow junctions called for by modern, sub-0.13 micron devices are termed "Ultra-Shallow Junctions" or USJs.

Methods of manufacturing boron doped P-type junctions have been hampered by difficulty in the ion-implantation process using boron. The boron atom, being light (MW =10.8), can penetrate more deeply into a silicon substrate and diffuse throughout the substrate lattice rapidly during annealing or other elevated temperature processes.

Boron clusters or cages, e.g., boranes have been investigated as a feed stock for delivering boron to a semiconductor substrate with reduced penetration. For example, boron ions may be implanted into a substrate by ionizing boron hydride molecules of the formula BₙHₘ (where 100> n >5 and m≤n+8) and an ion source for use in said implantation methods. Certain preferred compounds for use in the boron ion implantation methods included decaborane (B₁₀H₁₄) and octadecaborane (B₁₈H₂₂).

Large boron hydride compounds, that is boron compounds having between 5 and about 100 (more typically between 10 and about 100 or between 5 and about 25 boron atoms) are preferred for use in molecular ion implantation methods for delivering boron atoms to a semiconductor substrate. Typically two or more structural isomers exist of large boron hydride compounds, e.g., two or more compounds having the same chemical formula but different structural arrangement of boron atoms in the cage structure. In addition, two or more structurally related boron hydride compounds having the same number of boron atoms but different numbers of hydrogen atoms have been isolated for various sized boron clusters. Such compounds are frequently referred to as *closo* (BₙHₙ), *nido*(BₙHₙ₊₂), *arachno* (BₙHₙ₊₄), *hypho* (BₙHₙ₊₆), *conjuncto* (BₙHₙ₊₈), and the like. Thus, a plurality of different boron hydride species, including structural isomers and compounds containing various amounts of hydrogen are frequently known for boron hydrides having n boron atoms. See, for example, Jemmis, et al., J. Am. Chem. Soc., v. 123, 4313-4323 (2001), which provides a review of various macropolyhedral boranes and known compounds having n boron atoms and various amounts of hydrogen.

International patent application WO 03/044837, (Applied Materials, Inc, Santa Clara CA) recites methods of ion implantation in which an isotopically enriched boron compounds including ¹¹B enriched compounds are ionized and then implanted into a substrate. The '837 publication recites the preparation of the iosotopically enriched boranes by the method recited in U.S. Patent 6,086,837 (Cowan, et al.), which methods are reported to be the current industrial process for the preparation of boranes isotopically enriched in ¹⁰B or ¹¹B.

Cowan (U.S. Patent 6,086,837) recites a method of preparing B-10 enriched decaborane starting with B-10 enriched boric acid. The Cowan preparation of either B-10 or B-11 enriched boron hydrides begins with boric acid and involves a multitude of synthetic and purification steps. More particularly, the Cowan process for conversion of boric acid into an alkali metal borohydride involves numerous time consuming steps and results in a relatively low yield of valuable B-10 enriched borohydride which must then be subjected to furthur reactions to obtain final product.

Thus, the Cowan method starts with the preparation of B-10 methylborate from boric acid and methanol using an azeotropic distillation method. The methylborate is separated from remaining methanol by freeze recrystallization by means of three one step procedures to produce an 80% yield of trimethylborate. The trimethylborate is then added to a suspension of sodium hydride in mineral oil at 220°C-250°C and heated for 12 hrs. For safety, a metal reflux condenser is required. Isolation of the formed borohydride requires special attention. First, the excess sodium hydride is destroyed by pouring the mineral oil mixture into a mixture of ice and water, a rather exothermic process evolving gaseous hydrogen. Then the aqueous borohydride is separated from the mineral oil by decantation or use of separatory funnel. The aqueous borohydride must be purged of methanol by either heating to 60 °C and purged with a nitrogen stream or by removal under reduced pressure. The resulting aqueous solution is comprised of sodium hydroxide and the B-10 enriched borohydride. Carbon dioxide gas is bubbled through the solution converting the sodium hydroxide to sodium carbonate. The resulting slurry is then extracted with n-propylamine and the n-propylamine evaporated to yield final product. The solubilty of sodium borohydride in n-propylamine is limited and appreciable volumes of the volatile solvent are needed. Typical yields of 45-65% are obtained. A total often time consuming steps are required to prepare isotopically enriched sodium borohydride by the procedure recited in Cowan.

U.S. Patent 2,642,453, issued to Lippincott, relates to methods of preparing borates of tertiary alcohols such as methods of preparing tri(tert-butyl)borate and the like by condensation of boric acid and a tertiary alcohol and water removal by fractional distillation of an azeotrope. The preparation and rate of hydrolysis of a variety of boric acid esters was recited by H. Steinberg and D.L. Hunter in Industry and Engineering Chemistry, v. 49, No. 2, (1957) p.174-181.

U.S. Patent 3,063,791, issued to Kollonitsch, et al., relates to method of preparing natural abundance alkali and alkaline earth metal borohydrides from boric acid by contacting an intermediate trialkylborate with alkali metal aluminum hydride. Kollonitsch does not provide methods of synthesis of isotopically enriched borohydrides.

Dunks and coworkers recite methods of preparing MB₁₁H₁₄ salts and decaborane (B₁₀H₁₄) from metal borohydride or MB₃H₈ starting materials. U.S. Patent 4,115,520, U.S. Patent 4,115,521, and U.S. Patent 4,153,672, each of which was issued to Dunks, et al., relate to methods of synthesis of decaborane and methods of synthesis of B₁₁H₁₄⁻.

CS 229 336 discloses the synthesis of isotopically enriched sodium borohydride by reduction of tri(methoxyethyl) borate with sodium aluminum hydride.

Although there have been reports in the literature for the synthesis of isotopically enriched boron , these synthetic routes are lengthy and often produce compounds in notably low yields. It thus would be desirable to have new methods to synthesize isotopically enriched borohydride and isotopically enriched boranes from isotopically enriched boric acid. It would be particularly desirable to have new methods to synthesize isotopically enriched MBH₄, MB₁₁H₁₄, B₁₀H₁₄ and methods of preparing isotopically enriched large boranes of the formula, BₙHₘ, (where n is between 12 and 96 and m ≤ n+8).

### SUMMARY OF THE INVENTION

We have now found new methods for the preparation of isotopically enriched metal borohydride, isotopically enriched decaborane, and isotopically enriched metal tetradecahydroundecaborate salt (MB₁₁H₁₄). Moreover, the methods of synthesis for metal tetradecahydroundecaborate salt and decaborane incorporate the instant methods of preparing isotopically enriched metal borohydride. The invention is particularly useful for synthesis of isotopically enriched MBH₄, MB₁₁H₁₄ and B₁₀H₁₄, where M is a monovalent or divalent cation.

In one aspect, the invention provides an improved method of synthesizing an isotopically enriched metal boron hydride, the method comprising the steps of:
(a) providing isotopically enriched boric acid;
(b) contacting the isotopically enriched boric acid with an alcohol under conditions conducive to formation of an isotopically enriched borate; and
(c) reducing the isotopically enriched borate with a metal aluminum hydride under conditions conducive to formation of isotopically enriched metal borohydride, as claimed in claim 1.

In another aspect, the invention provides an improved method of preparing isotopically enriched metal tetradecahydroundecaborate salt, the method comprising the steps of:
(a) providing isotopically enriched metal borohydride prepared by any of the methods provided herein; and
(b) contacting a solution of the isotopically enriched metal borohydride with a compound of the formula, R-X or isotopically enriched BY₃(ligand), under conditions conducive to the formation of a metal tetradecahydroundecaborate salt, wherein
   R is alkyl, alkenyl, or aralkyl;
   X is fluoro, chloro, bromo, iodo, alkylsulfonate, or arylsulfonate;
   Y is fluoro, chloro, or bromo; and
   ligand is absent, an ether, an amine, or a pyridine.

In yet another aspect, the invention provides methods of preparing isotopically enriched decaborane, the method comprising the steps of:
(a) providing isotopically enriched metal tetradecahydroundecaborate salt according the to methods provided herein; and
(b) contacting the isotopically enriched metal tetradecahydroundecaborate salt with an oxidizing agent having an electrode potential of at least about 0.6 volts at a temperature of between about -10°C and about 50°C under conditions conducive to oxidation of the metal tetradecahydroundecaborate salt.

The methods of the invention provide high yields of isotopically enriched metal borohydrides, isotopically enriched metal tetradecahydroundecaborate salts and isotopically enriched decaborane with fewer synthetic and purification steps compared to methods recited in the literature. Moreover, the methods of synthesis are suitable for preparing isotopically enriched decaborane and isotopically enriched metal tetradecahydroundecaborate salts which are suitable for use as starting materials for a variety of larger isotopically enriched boranes, or mixture of isotopically enriched boranes, in which each borane contains n boron atoms (12 <n<100) wherein the methods comprise preparing at least one isotopically enriched MBH₄, isotopically enriched MBₙH₁₄ and/or isotopically enriched B₁₀H₁₄ by the methods of the invention. Preferred methods of synthesis generate product mixtures having substantially uniform chemical composition, e.g., preferred methods of synthesis provide a compound of the formula BₙHₘ, which may be present as one or more structural isomers. In certain other aspects, methods of synthesis which provide a mixture of boranes, each of which comprises n boron atoms and a different number of hydrogen atoms, are also contemplated by the present invention, in part because, such mixtures of various n boron atom boranes will generate substantially the same mixture of molecular ions when subjected to ionization during an implantation process as a borane composition comprising a single borane of the formula BₙHₘ. Thus, methods which provide two or more borane compounds such as BₙHₘ, BₙHₚ, and the like, where m ≠ p and the absolute difference between m and p is less than about 8, are also contemplated by the invention.

Other aspects of the invention are discussed *infra*.

### DETAILED DESCRIPTION OF THE INVENTION

Remarkably, we have discovered new methods for the preparation of boron hydride and salts thereof, including metal borohydrides, decaborane, metal tetradecahydroundecaborate salts, and boron hydride compounds prepared from same. The methods of the invention provide an efficient synthetic procedure for the preparation of isotopically enriched boranes and boron containing compounds.

The invention provides a method of synthesizing an isotopically enriched metal borohydride, the method comprising the steps of:
(a) providing isotopically enriched boric acid;
(b) contacting the isotopically enriched boric acid with an alcohol under conditions conducive to formation of an isotopically enriched borate; and
(c) reducing the isotopically enriched borate with a metal aluminum hydride under conditions conducive to formation of isotopically enriched metal borohydride, as claimed in claim 1.

In the method of metal borohydride synthesis provided by the invention, the isotopically enriched borate prepared by esterification of boric acid is a compound of Formula I:

[(RO)₂B-O-]ₙ-R' I

wherein
each occurrence ofR is independently selected from the group consisting of linear or branched alkyl, cycloalkyl, cycloalkyl-alkyl, alkenyl, aryl, aralkyl, and haloalkyl, or
two R groups taken in combination form a α,ω-alkylene group or a 1,2-cylcoalkylene group each of which may be optionally substituted with one or more groups selected from the group consisting of alkyl, alkenyl, cycloalkyl, cycloalkyl-alkyl, aryl, aralkyl, and alkoxy;
n is 1 or 2; and
R' is selected from the group consisting of alkyl, alkenyl, aryl, aralkyl, and haloalkyl, when n = 1, or R' is a α,ω-alkylene group or a 1,2-cylcoalkylene group each of which may be optionally substituted with one or more groups selected from the group consisting of alkyl, alkenyl, cycloalkyl, cycloalkylalkyl, aryl, and aralkyl, when n = 2,
or
an isotopically enriched borate of Formula III: 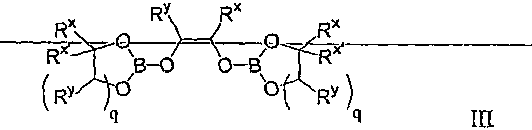 wherein R^{x}, R^{x'}, and R^{y} are independently selected at each occurrence from the group consisting of hydrogen, linear and branched C₁₋₁₀alkyl, C₁₋₁₀alkoxy, and C₃₋₈cycloalkyl, or R^{x} and R^{y}, taken in combination form a α,ω-alkylene group; and q is 1 or 2. Certain particularly preferred compounds of Formula III include those in which R^{x}, R^{x'}, and R^{y} are selected from the group consisting of hydrogen or linear or branched C₁₋₄alkyl. Particularly preferred compounds of Formula III include those in which R^{x}, R^{x'}, and R^{y} are methyl and q is 1 or 2. The compound prepared by condensation of boric acid and 2-methyl-2,4-pentanediol, e.g., tris(2-methyl-2,4-pentandiolate)diborate, is a particularly preferred compound of Formula III.

In certain preferred methods of isotopically enriched metal borohydride synthesis provided by the invention include those methods in which the isotopically enriched borate is a compound of the formula, B(OR)₃, wherein R is independently selected at each occurrence from the group consisting of linear or branched C₁₋₁₀alkyl, phenyl, benzyl,-C₃₋₈cycloalkyl, C₃₋₈cycloalkyl-C₁₋₁₀alkyl, C₂₋₁₀alkenyl, C₁₋₁₀alkoxy, C₁₋₁₀haloalkyl, and C₂₋₁₀alkylether.

In certain other preferred methods of synthesis of isotopically enriched metal borohydrides provided by the invention, the isotopically enriched borate is a compound of Formula II: 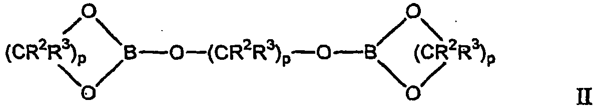 wherein R² and R³ are independently selected at each occurrence from the group consisting of hydrogen, linear or branched alkyl, cycloalkyl, cycloalkyl-alkyl, alkenyl, aryl, aralkyl, haloalkyl, and alkylether; and
p is an integer selected from 1-5.

Although the stoichiometry of the alcohol and isotopically enriched boric acid of the esterification step is not particularly limited, it is generally preferred to have a sufficient quantity of alcohol to effect complete conversion of the boric acid to borate. More preferably, the isotopically enriched boric acid is contacted with at least three equivalents of the alcohol.

In certain particularly preferred esterification steps, the isotopically enriched boric acid is contacted with at least three equivalents of a linear or branched C₁₋₁₀akanol or at least one and a half (1.5) equivalents of a C₂₋₁₀alkanediol. More preferably, the isotopically enriched boric acid is contacted with between about three and six equivalents of a linear or branched C₁₋₁₀alkanol or between about one and a half (1.5) to three equivalents of a C₂₋₁₀alkanediol. In certain particularly preferred esterification steps, the isotopically enriched boric acid is contacted with about three equivalents of a linear C₂₋₁₀alkanol or about one and a half (1.5) equivalents of a linear or branched 1,2-C₂₋₁₀alkanediol.

Preferred esterification steps comprise contacting the isotopically enriched boric acid with the alcohol under dehydrative conditions, e.g., under conditions conducive to the consumption or elimination of water from the reaction mixture. Although any means of water removal is acceptable, and may include as non-limiting examples, molecular sieves, silicates, anhydrous salts such as calcium chloride, magnesium sulfate, sodium sulfate, and the like, or fractional distillation of water or an azeotrope thereof. In general, fractional distillation of water or a water:solvent azeotrope are generally preferred means of removing water from the esterification reaction mixture. Preferred methods of water removal from the esterification reaction mixture include fractional distillation of an azeotrope of water and at least one solvent selected from toluene, xylene, mesitylene, benzene, 1,2-dichloroethane, and mixtures thereof.

The esterification step is typically conducted at an elevated temperature, e.g., a temperature of at least about 25°C. More preferably, the esterification is conducted at a temperature of more than about 30°C, 40°C, 50°C, 60°C, 70°C, or more than about 80°C. In certain particularly preferred embodiments, the esterification step is conducted at a temperature of between about 90°C and about 200°C, between about 95°C and about 175°C, or at a temperature sufficient to reflux the reaction mixture.

In certain aspects of the invention, methods of isotopically enriched borohydride synthesis comprise a borate reduction step which comprises contacting the isotopically enriched borate, (e.g., B(OR)₃) with a mixture of a metal aluminum hydride and a solvent. Typically preferred metal aluminum hydrides comprise at least one and more preferably two, three, or four hydride ligands bound to an aluminum atom. Preferred metal aluminum hydrides include those compounds in which the metal is a group I or group II metal such as lithium, sodium, potassium, calcium, magnesium or the like. Particularly preferred metal aluminum hydrides include lithium aluminum hydride (LAH), sodium aluminum hydride, and mixture thereof.

The methods provided by the instant invention are suitable for the preparation of metal borohydrides and metal borodeuterides. Thus, substitution of a metal aluminum deuteride having at least one or more preferably two, three or four deuteride ligands bound to an aluminum atom may be used in the methods of the invention in place of the metal aluminum hydrides to prepare isotopically enriched metal borodeuterides.

In preferred methods of the invention, the isotopically enriched borate is added to a mixture of at least one metal aluminum hydride and at least one organic fluid (e.g., organic solvent). Preferred solvents which are suitable for use in the reduction step include, but are not limited to, oxiranes, ethers, polyethers, and mixtures thereof. More preferred solvents are typically selected from 5 to 7 membered heterocycles having 1 or 2 oxygen ring atoms, (C₁₋₁₀alkyl)₂ethers, Me(OCH₂CH₂)ₙOMe (where n is 1 to about 5), and mixtures thereof. More preferably the solvent is selected from diethyl ether, tetrahydrofuran, 1,3-dioxolane, 1,4-dioxane, 1,3-dioxane, methyl-tert-butyl ether, dimethoxyethane, diglyme, tetraglyme and mixtures thereof. In certain embodiments, the reduction step solvent may further comprise one or more additional hydrocarbon solvents selected from benzene, cyclohexane, methylcyclohexane, toluene, xylenes, linear and branched C₅₋₁₀alkanes, petroleum ethers, and mixtures thereof.

The isotopically enriched borate is typically added to the metal aluminum hydride/solvent mixture at a temperature and at a rate suitable to prevent uncontrolled exothermic reactions. Thus, preferred reduction steps comprise contacting the isotopically enriched borane with the metal aluminum hydride at a temperature of between about -78°C and about 200 °C. More preferably the isotopically enriched borane and the metal aluminum hydride are contacted at a temperature of between about -50°C and about 50°C and the mixture then heated to a temperature of between about 50°C and about 150°C. In other preferred reduction steps provided by the instant invention, the isotopically enriched borane and the metal aluminum hydride are contacted at a temperature of between about 0°C and about 30°C and the mixture then heated to a reflux. In yet other preferred reduction steps of the methods of the invention, the isotopically enriched borane is added to the metal aluminum hydride mixture at a rate suitable for maintaining the mixture at a temperature below the boiling point of the mixture. In general, after all of the isotopically enriched borate is added to the metal aluminum hydride mixture, the reaction mixture is heated at reflux for between about 1 hour and about 48 hours, or more preferably for between about 1 hour and about 24 hours, or the reaction mixture is heated for between about 2 hours and about 12 hours.

The invention provides methods of synthesis of isotopically enriched metal borohydrides from isotopically enriched boric acid. Thus, the invention provides methods of preparing isotopically enriched metal borohydrides starting from isotopically enriched boric acid having 50% of the boron atoms present are ¹⁰B, at least about 80% of the boron atoms present in boric acid are ¹⁰B, at least about 90% of the boron atoms present in boric acid are ¹⁰B, at least about 95% of the boron atoms present in boric acid are ¹⁰B, or more preferably at least about 99% of the boron atoms present in boric acid are ¹⁰B. The invention further provides methods of preparing isotopically enriched metal borohydrides starting from isotopically enriched boric acid having 90% of the boron atoms present are ¹¹B, in which at least about 95% of the boron atoms present in the boric acid are ¹¹B, or more preferably in which at least about 99% of the boron atoms present in the boric acid ¹¹B.

In certain other aspects, the invention provides a method of preparing isotopically enriched metal tetradecahydroundecaborate salt, the method comprising the steps of:
(a) providing isotopically enriched metal borohydride prepared according to any one of the methods described herein; and
(b) contacting a solution of the isotopically enriched metal borohydride with a compound of the formula, R-X or isotopically enriched BY₃(ligand), under conditions conducive to the formation of a metal tetradecahydroundecaborate salt, wherein
   R is alkyl, alkenyl, or aralkyl;
   X is fluoro, chloro, bromo, iodo, alkylsulfonate, or arylsulfonate;
   Y is fluoro, chloro, or bromo; and
   ligand is absent, an ether, an amine, or a pyridine.

In certain other aspects, the invention provides a method of preparing isotopically enriched metal tetradecahydroundecaborate salt, the method comprising the steps of:
(a) providing isotopically enriched boric acid;
(b) contacting the isotopically enriched boric acid with an alcohol under conditions conducive to formation of an isotopically enriched borate;
(c) reducing the isotopically enriched borate with a metal aluminum hydride under conditions conducive to formation of isotopically enriched metal borohydride; and
(d) contacting a solution of the isotopically enriched metal borohydride with a compound of the formula, R-X or isotopically enriched BY₃(ligand), under conditions conducive to the formation of a metal tetradecahydroundecaborate salt, wherein
   R is alkyl, alkenyl, or aralkyl;
   X is fluoro, chloro, bromo, iodo, alkylsulfonate, or arylsulfonate;
   Y is fluoro, chloro, or bromo; and
   ligand is absent, an ether, an amine, or a pyridine.

In certain preferred methods of preparing isotopically enriched metal tetradecahydroundecaborate salts, the isotopically enriched metal borohydride is contacted with a linear or branched C₁₋₁₀chloroalkane, a linear or branched C₁₋₁₀bromoalkane, a linear or branched C₁₋₁₀iodoalkane, chloroC₃₋₈cycloalkane, chloroC₅₋₈cycloalkene, bromoC₃₋₈cycloalkane, bromoC₅₋₈cycloalkene, iodoC₃₋₈cycloalkane, iodoC₅₋₈cycloalkene, C₆₋₁₀aralkylmethylchloride, C₆₋₁₀aralkylmethylbromide, C₆₋₁₀aralkylmethyliodide, or a mixture thereof. More preferably, the compound of the formula, R-X, is a compound selected from linear or branched C₁₋₁₀chloroalkane, linear or branched C₁₋₁₀bromoalkane, and a linear or branched C₁₋₁₀iodoalkane. In other preferred embodiments, the compound of the formula, R-X, is selected from linear or branched C₃₋₁₀chloroalkane, a linear or branched C₃₋₁₀bromoalkane, a linear or branched C₃₋₁₀iodoalkane. In certain particularly preferred methods of preparing isotopically enriched metal tetradecahydroundecaborate salts, the compound of the formula, R-X, is a bromoalkane or a iodoalkane such as compounds selected from the group consisting of bromobutane, iodobutane, bromopentane, iodopentane, bromohexane, iodohexane, bromoheptane, iodoheptane, bromooctane, iodooctane, benzylbromide, benzyliodide, and mixtures thereof.

In certain other preferred methods of preparing isotopically enriched metal tetradecahydroundecaborate salts, the isotopically enriched BY₃(ligand) is a compound in which Y is fluoro and ligand is an ether. More preferably, ligand is selected from tetrahydrofuran or diethyl ether, e.g., BY₃(ligand) is isotopically enriched BF₃-tetrahydrofuran or isotopically enriched BF₃-(OEt₂).

In preferred methods of synthesis of isotopically enriched metal tetradecahydroundecaborate salts, the isotopically enriched metal borohydride is contacted with at least about one equivalent of the compound of the formula, R-X. More preferably, the metal borohydride is contacted with between about 1 and about 10 equivalents of the compound of the formula, R-X, between about 1.5 and about 7.5 equivalents of the compound of the formula, R-X, or , between about 2 and about 6 equivalents of the compound of the formula, R-X. Other preferred methods of synthesis of isotopically enriched metal tetradecahydroundecaborate salts, the isotopically enriched metal borohydride is contacted with about 2, about 2.5, about 3, about 3.5, or about 4 equivalents of the compound of the formula, R-X. In certain particularly preferred methods of synthesis of isotopically enriched metal tetradecahydroundecaborate salts, the isotopically enriched metal borohydride is contacted with about 2.5 equivalents of the compound of the formula, R-X.

In preferred methods of synthesis of isotopically enriched metal tetradecahydroundecaborate salts, the metal borohydride and the compound of the formula, R-X are contacted at a temperature of between about 50°C and about 200°C. More preferably, the mixture of the metal borohydride and the compound of the formula, R-X, is heated to between about 60°C and about 180°C, between about 70°C and about 160°C, or between about 80°C and about 140°C. Yet other preferred embodiments, the mixture is heated at a temperature of about 80°C, about 90°C, about 100°C, about 110°C, about 120°C, about 130°C, or about 140°C. In certain preferred embodiments, a condensor or other mechanism of returning volatilized material to the reaction mixture is affixed to the reactor in which the mixture of the metal borohydride and the compound of the formula, R-X, is heated to prevent volatile loss of solvent or the compound of the formula, R-X.

The mixture of the metal borohydride and the compound of the formula, R-X, is typically heated in the presence of at least one non-reactive fluid. Preferred non-reactive fluids include organic solvents having a boiling point of at least the temperature at which the mixture is heated. More particularly, the solvent may be selected from oxiranes, polyethers, aromatic hydrocarbons and the like. Certain, non-limiting, preferred solvents which are suitable for addition to the mixture of the borohydride and the compound of the formula, R-X, include dioxane, dimethoxyethane, diglyme, triglyme, tetraglyme, toluene, xylene, and mixtures thereof.

In another preferred aspect, the invention provides methods of synthesis of isotopically enriched metal tetradecahydroundecaborate salts. Thus, the invention provides methods of preparing isotopically enriched metal tetradecahydroundecaborate salts, in which at least about 50% of the boron atoms are ¹⁰B, at least about 80% of the boron atoms are ¹⁰B, at least about 90% of the boron atoms are ¹⁰B, at least about 95% of the boron atoms are ¹⁰B, or more preferably at least about 99% of the boron atoms are ¹⁰B. The invention further provides methods of preparing isotopically enriched metal tetradecahydroundecaborate salts, in which at least about 90% of the boron atoms are ¹¹B, in which at least about 95% of the boron atoms are ¹¹B, or more preferably in which at least about 99% of the boron atoms are ¹¹B.

In yet other aspects, the invention provides a method of preparing isotopically enriched decaborane, the method comprising the steps of:
(a) providing isotopically enriched metal tetradecahydroundecaborate salt according to the method recited herein; and
(b) contacting the isotopically enriched metal tetradecahydroundecaborate salt with an oxidizing agent having an electrode potential of at least about 0.6 volts at a temperature of between about -10°C and about 50°C under conditions conducive to oxidation of the metal tetradecahydroundecaborate salt.

More particularly, the invention provides methods of preparing isotopically enriched decaborane, the method comprising the steps of:
(a) providing isotopically enriched boric acid;
(b) contacting the isotopically enriched boric acid with an alcohol under conditions conducive to formation of an isotopically enriched borate;
(c) reducing the isotopically enriched borate with a metal aluminum hydride under conditions conducive to formation of isotopically enriched metal borohydride; and
(d) contacting a solution of the isotopically enriched metal borohydride with a compound of the formula, R-X or isotopically enriched BY₃(ligand), under conditions conducive to the formation of a metal tetradecahydroundecaborate salt, wherein
   R is alkyl, alkenyl, or aralkyl;
   X is fluoro, chloro, bromo, iodo, alkylsulfonate, or arylsulfonate;
   Y is fluoro, chloro, or bromo; and
   ligand is absent, an ether, an amine, or a pyridine; and
(e) contacting the isotopically enriched metal tetradecahydroundecaborate salt with an oxidizing agent having an electrode potential of at least about 0.6 volts at a temperature of between about -10°C and about 50°C under conditions conducive to oxidation of the metal tetradecahydroundecaborate salt.

Preferred oxidation conditions suitable for use the methods of the invention include those recited in U.S. Patent 4,115,521, issued to Dunks et al and Inorganic Chemistry, v. 20, (1981) p 1692. More preferably, oxidants suitable for the methods of synthesis provided herein include oxidants selected from Ag⁺²/H⁺, Au⁺3/H⁺, Ce⁺⁴/H, CeOH⁺³/H⁺, HClO⁻/H⁺, ClO₃⁻/H⁺, ClO₄⁻/H⁺, CO⁺³, Cr⁺⁴/H⁺, Fe(phenanthroline)₃⁺³/H⁺, IO₃⁻/H⁺, MnO₂/H⁺, NiO₂/H⁺, Np⁺⁴, O₂/H⁺, PbO₂⁻/H⁺, PbO₂/SO₄²⁻/H⁺, Pu⁺⁴, Pu⁺⁵, RuO₄, Ti⁺³, U⁺⁵, and V(OH)⁺.

In another preferred aspect, the invention provides methods of synthesis of isotopically enriched decaborane. Thus, the invention provides methods of preparing isotopically enriched decaborane, in which at least about 50% of the boron atoms are ¹⁰B, at least about 80% of the boron atoms are ¹⁰B, at least about 90% of the boron atoms are ¹⁰b, at least about 95% of the boron atoms are ¹⁰B, or more preferably at least about 99% of the boron atoms are ¹⁰B. The invention further provides methods of preparing isotopically enriched decaborane, in which at least about 90% of the boron atoms are ¹¹B, in which at least about 95% of the boron atoms are ¹¹B, or more preferably in which at least about 99% of the boron atoms are ¹¹B.

Certain preferred methods of synthesizing isotopically enriched decaborane is represented schematically in the flow chart, as follows:

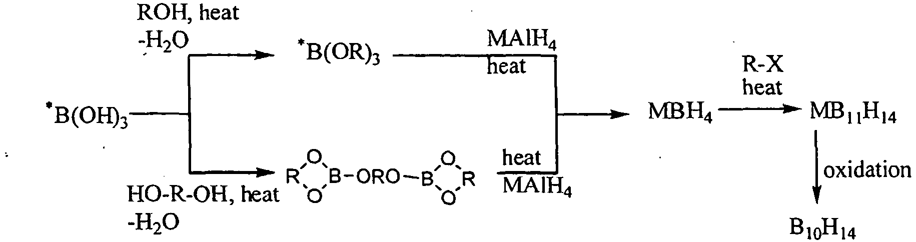

As used herein, "borane" or "boron hydride" refers to compounds comprising boron and hydrogen. More particularly borane or boron hydride is indented to refer to boron hydrogen compounds of the formula BₙHₘ where 5 ≤ n ≤ 100 and m ≤ n+ 8 wherein m and n satisfy the electron counting rules of macropolyhedral boranes. Although in certain embodiments additional elements may be present in the boron hydride compounds, typically neutral boron hydride compounds consist essentially of boron and hydrogen. The terms borane and boron hydride are intended to encompass isomerically pure boranes, mixtures of steroisomers, diastereomers, and structural isomers of compounds of the formula BₙHₘ, and mixtures of boranes of the formula BₙH₍ₘ₎ᵢ where i is the number of different boranes and (m)i is the number of hydrogen atoms in each of the i borane compounds wherein each (m)i can be the same or different. Salts comprising a boron hydride anion comprise a cation that is selected from any cationic species capable of forming a stable isolable salt. Preferred cations include monovalent and divalent cations and include, for example, alkali metals, alkaline earth metals, and ammonium cations such as trialkylammonium and tetraalkylammonium cations.

As used herein, the term "alkyl" refers to monovalent straight, branched, or cyclic alkyl groups preferably having from 1 to 20 carbon atoms, most preferably 1 to 10 carbon atoms ("lower alkyl"). This term is exemplified by groups such as methyl, ethyl, n-propyl, iso-propyl, n-butyl, iso-butyl, n-hexyl, 2-methylpropyl, 3-methylbutyl, and the like.

As used herein, the term "cycloalkane" refers to cyclic aliphatic hydrocarbons having between 3 and about 10 ring carbon atoms, or more preferably between 5 and 8 or between 5 and 7 ring carbon atoms. Cycloalkanes may be substituted with one or more alkyl group substituents. This term is exemplified by compounds such as cyclopentane, cyclohexane, methylcyclohexane and the like.

As used herein, the term "aralkyl" refers to monovalent straight, branched or cyclic alkyl groups substituted by at least one aryl group, wherein the term "aryl" indicates aromatic groups containing only carbon in the aromatic ring such as phenyl, biphenyl, 1-naphthyl and 2-naphthyl. Specifically preferred aralkyl groups include benzyl, naphthylmethyl, phenethyl, 2-phenylethyl, and the like.

As used herein, the term "halo" or "halogen" refers to fluoro, chloro, bromo, or iodo.

As to any of the above groups that contain one or more substituents, it is understood by those skilled in the art, that such groups do not contain any substitution or substitution patterns which are sterically unfeasible and or synthetically impracticable.

The following non-limiting example is illustrative of the invention. All documents mentioned herein are incorporated herein by reference.

### Example 1

### ¹⁰B Tributylborate

A one-neck 500 mL round bottom flask having a Dean-Stark receiver and reflux condensor attached thereto was charged with ¹⁰B-boric acid (40 g), n-butanol (200 g), and toluene (about 100 mL). The mixture was heated to reflux and water was removed from the mixture by distillation of a toluene-water azeotrope. After removing the Dean-Stark receiver, the product mixture was fractionally distilled. ¹⁰B tributylborate was obtained as a fraction boiling at 226-228°C under ambient pressure (195g, 87% isolated yield).

### Example 2

### ¹¹B Enriched Tributylborate

Starting with ¹¹B enriched boric acid, ¹¹B tributylborate was prepared according to the procedure recited in Example 1.

### Example 3

### ¹⁰B Enriched tris(2-methyl-2,4-pentanediolate)diborate

A mixture of ¹⁰B enriched boric acid, 2-methyl-2,4-pentanediol, and toluene were combined in a 1:1.5:1 molar ratio in a reactor having a Dean-Stark Receiver and a condenser attached thereto. The reaction mixture was heated to reflux and water generated by the condensation reaction was removed as a toluene-water azeotrope. The mixture was heated until the three molar equivalents of water had been collected in the Dean-Stark trap. The reaction mixture comprises the product ¹⁰B Enriched tris(2-methyl-2,4-pentanediolate)diborate in essentially quantitative yield and toluene. The mixture may be contacted directly with metal aluminum hydride in the next step of the metal borohydride synthesis. Alternatively, the ¹⁰B Enriched tris(2-methyl-2,4-pentanediolate)diborate may be purified by toluene removal under a reduced pressure atmosphere.

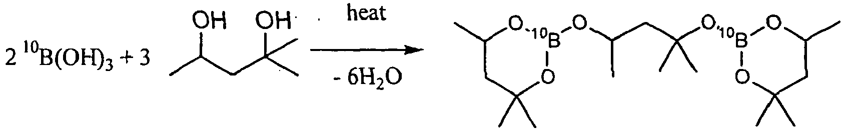

### Example 4

¹¹B Enriched tris(2-methyl-2,4-pentanediolate)diborate was prepared by the method of Example 3 wherein ¹¹B enriched boric acid was used in place of ¹⁰B boric acid.

### Example 5

### ¹¹B Enriched Sodium Borohydride

A five liter 3-neck flask equipped with an overhead stirrer and a reflux condenser was charged with anhydrous tetrahydrofuran (1 L) and anhydrous diethyl ether (700 mL) under an argon atmosphere. Sodium aluminum hydride (105 g, ca 86% purity, 1.77 mole) was added to the reaction flask and a pressure equalized addition funnel was charged with ¹¹B enriched tributylborate (427 mL, 1.57 mole) which was prepared in Example 2. The borate was added dropwise to a stirred reaction mixture and the reaction mixture was gradually heated to reflux and maintained at reflux for several hours. Upon cooling, crude solid ¹¹B enriched sodium borohydride was filtered under a positive pressure of argon atmosphere, the solid was washed with dry toluene to remove aluminum butoxide byproducts, and the toluene removed by filtration under a positive pressure argon atmosphere. The toluene wash and filtration process is repeated as necessary to remove residual aluminum butoxide byproducts. Yield: 55.5 g, 1.46 mole, 93.1%. The only boron species observed by ¹¹B NMR spectroscopy is the resonance corresponding to ¹¹BH₄ (a 1:4:6:4:1 quintet centered at -37ppm). If necessary, ¹¹B enriched Na¹¹BH₄ can be further purified by recrystallization from diglyme or by extraction with liquid ammonia. The resulting products retain the isotopic purity of the starting ¹¹B enriched ¹¹B(OH)₃, and ¹¹B enriched tributylborate. This preparation has been successfully scaled up to multi-kilogram quantities without loss of product quality.

### Example 6

### ¹⁰B Enriched Lithium Borohydride

A round bottom flask was charged with lithium aluminum hydride (5.5g) in anhydrous tetrahydrofuran (40 mL), anhydrous diethyl ether (70 mL), and a magnetic stirbar under an argon atmosphere. A toluene solution containing the tris(2-methyl-2,4-pentanediolate)diborate prepared in Example 3 was added dropwise to the reaction mixture from a pressure equalized dropping funnel. The reaction mixture was then heated for 15 hrs. After cooling, the precipitate was filtered to remove aluminum alkoxide byproducts. The clear filtrate contains ¹⁰B enriched lithium borohydride as the only boron species (evidenced the ¹⁰B NMR spectra which contains a sole resonance at -37 ppm (a 1:4:6:4:1 quintet). No other boron resonance was observed. Lithium borohydride was precipitated from solution by addition of 1,4-dioxane, which can be subsequently removed by heating the isolated solid *in vacuo* to yield ¹⁰B enriched litium borohydride.

### Example 7

### Preparation of Na¹¹B₁₁H₁₄ and ¹¹B₁₀H₁₄

Na¹¹BH₄ is readily converted into B-11 enriched decaborane, ¹¹B₁₀H₁₄, via Na¹¹B₁₁H₁₄ by the methods described in US Patents 4,153,672; 4,115,520; and 4,115,521 ; issued to Dunks, et al., and academic publications, Dunks, et al., Inorganic Chemistry, v. 17, (1978) p 1514 and Dunks, et al., Inorganic Chemistry, v. 20, (1981) p 1692. The resulting products retain the isotopic purity of the starting ¹¹B enriched Na¹¹BH₄.

The following procedure was used to prepare the ¹¹B enriched tetradecahydroundecaborate(1-) ion, [¹¹B₁₁H₁₄]⁻, from ¹¹B enriched sodium borohydride. A 6 liter four necked round bottom flask (placed in a heating mantle) was equipped with a thermometer adapter with thermometer inserted and connected to an argon source. An overhead stirrer was inserted in the center neck. A pressure equalized addition funnel was inserted into a third neck. Lastly, a cold water condenser was inserted into the fourth neck with the exit of the condenser leading to an acetone filled scrubber. With the apparatus thoroughly dried and purged with argon, the flask was sequentially charged with ¹¹B enriched sodium borohydride (58g, 1.54mole) and dry diglyme (600 mL). The reaction mixture was then heated to 105°C and n-bromopentane (480mL, 3.85mole) was added dropwise from the addition funnel over a period of five hours while maintaining the reaction mixture temperature at 105±5°C. The mixture was further heated until evolution of gases practically ceased.

After the reaction mixture was cooled to room temperature, the resulting slurry was filtered and washed with diethyl ether. Volatile compounds of the combined filtrate were removed under vacuum. The resulting oil is dissolved in water, triethylammonium chloride was added to induce precipitation of (HNEt₃)[¹¹B₁₁H₁₄]. An isolated yield of 60-67% is typical.

For conversion to B-11 enriched decaborane, the triethylammoniun salt is first converted to the potassium or sodium salt for solubility in water. Conversion to decaborane can be accomplished by oxidizing the [¹¹B₁₁H₁₄] salt as described in U.S. Patent 4,115,521, issued to Dunks et al and Inorganic Chemistry, v. 20, (1981) p 1692. Alternatively, the sodium salt of ¹¹B enriched B₁₁H₁₄⁻ can be carried through directly to ¹¹B enriched decaborane following removal of diglyme solvent as described in U.S. Patent 4,115,521, issued to Dunks *et. al.* and Inorganic Chemistry, v. 20, (1981) p 1692.

## Claims

1. A method of synthesizing an isotopically enriched metal borohydride, the method comprising the steps of:
(a) providing isotopically enriched boric acid;
(b) contacting the isotopically enriched boric acid with an alcohol under conditions conducive to formation of an isotopically enriched borate; and
(c) reducing the isotopically enriched borate with a metal aluminum hydride under conditions conducive to formation of isotopically enriched metal borohydride,
wherein the isotopically enriched borate is a compound of Formula I:
[(RO)₂B-O-)ₙ-R' I
wherein
each occurrence of R is independently selected from the group consisting of linear or branched alkyl, cycloalkyl, cycloalkyl-alkyl, alkenyl, aryl, aralkyl, and haloalkyl, or
two R groups taken in combination form a α,ω-alkylene group or a 1,2-cylcoalkylene group each of which may be optionally substituted with one or more groups selected from the group consisting of alkyl, alkenyl, cycloalkyl, cycloalkyl-alkyl, aryl, aralkyl, and alkoxy;
n is 1 or 2; and
R' is selected from the group consisting of alkyl, alkenyl, acryl, aralkyl, and haloalkyl, when n = 1, or R' is a α,ω-alkylene group or a 1,2-cylcoalkylene group each of which may be optionally substituted with one or more groups selected from the group consisting of alkyl, alkenyl, cycloalkyl, cycloalkyl-alkyl, aryl, and aralkyl, when n = 2;
or
wherein the isotopically enriched borate is a compound of the Formula III: 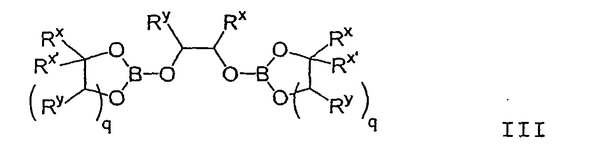 wherein
q is 1 or 2; and
R^{x}, R^{x'}, and R^{y} are independently selected at each occurrence from the group consisting of hydrogen, linear and branched C₁₋₁₀alkyl, C₁₋₁₀alkoxy, and C₃₋₈cycloalkyl, or R^{x} and R^{y}, taken in combination form a α,ω-alkylene group.

2. The method of claim 1, wherein R^{x} and R^{y} are selected from the group consisting of hydrogen or linear or branched C₁₋₄alkyl.

3. The method of claim 1, wherein esterification step comprises contacting isotopically enriched boric acid with at least three equivalents of a linear or branched C₁₋₁₀alkanol or at least one and a half (1.5) equivalents of a C₂₋₁₀alkanediol.

4. The method of claim 3, wherein the esterification step comprises contacting the isotopically enriched boric acid with three equivalents of a linear C₂₋₁₀alkanol or one and a half (1.5) equivalents of a linear or branched 1,2-C₂₋₁₀alkanediol.

5. The method of claim 1, wherein water generated during the esterification step is removed from the reaction mixture.

6. The method of claim 1, wherein the esterification step is conducted at a temperature of between 95°C and 175°C.

7. The method of claim 1, wherein the reduction step comprises contacting the borate with a mixture of a metal aluminum hydride and at least one solvent.

8. The method of claim 7, wherein at least one solvent is selected from diethyl ether, tetrahydrofuran, 1,3-dioxolane, 1,4-dioxane, 1,3-dioxane, methyl-tert-butyl ether, dimethoxyethane, diglyme, and mixtures thereof.

9. The method of claim 8, wherein the mixture comprises at least one additional hydrocarbon solvent selected from benzene, cyclohexane, methylcyclohexane, toluene, xylenes, linear and branched C₅₋₁₀alkanes, petroleum ethers, and mixtures thereof.

10. The method of claim 1, wherein the isotopically enriched borane and the metal aluminum hydride are cont.acted at a temperature of between -50°C and 50°C and the mixture then heated to a temperature of between 50°C and 150°C.

11. The method of claim 1, wherein the boric acid comprises at least 80% ¹⁰B.

12. The method of claim 1, wherein the boric acid comprises at least 95% ¹⁰B

13. The method of claim 1, wherein the boric acid comprises at least 95% ¹¹B.

14. A method of preparing isotopically enriched metal tetradecahydroundecaborate salt, the method comprising the steps of:
(a) providing isotopically enriched metal borohydride according the to method of any one of claims 1 to 13; and
(b) contacting a solution of the isotopically enriched metal borohydride with a compound of the formula, R-X or isotopically enriched BY₃(ligand), under conditions conducive to the formation of a metal tetradecahydroundecaborate salt, wherein
R is alkyl, alkenyl, or aralkyl;
X is fluoro, chloro, bromo, iodo, alkylsulfonate, or arylsulfonate;
Y is fluoro, chloro, or bromo; and
ligand is absent, an ether, an amine, or a pyridine.

15. A method of preparing isotopically enriched metal tetradecahydroundecaborate salt, the method comprising the steps of:
(a) providing isotopically enriched boric acid;
(b) contacting the isotopically enriched boric acid with an alcohol under conditions conducive to formation of an isotopically enriched borate;
(c) reducing the isotopically enriched borate with a metal aluminum hydride under conditions conducive to formation of isotopically enriched metal borohydride; and
(d) contacting a solution of the isotopically enriched metal borohydride with a compound of the formula, R-X or isotopically enriched BY₃(ligand), under conditions conducive to the formation of a metal tetradecahydroundecaborate salt, wherein
R is alkyl, alkenyl, or aralkyl;
X is fluoro, chloro, bromo, iodo, alkylsulfonate, or arylsulfonate;
Y is fluoro, chloro, or bromo; and
ligand is absent, an ether, an amine, or a pyridine,
wherein the isotopically enriched metal borohydride is contacted with at least two equivalents of the compound of the formula, R-X or wherein the isotopically enriched metal borohydride is contacted with at least two equivalents of the isotopically enriched compound of the formula, BY₃(ligand).

16. The method of any one of claims 14 and 15
wherein the metal borohydride and the compound of the formula, R-X are contacted at a temperature of between 50°C and 200° C or wherein the metal borohydride and the isotopically enriched compound of the formula, BY₃(ligand) are contacted at a temperature of between 50°C and 200°C.

17. The method of any one of claims 14, 15, and 16, wherein the metal borohydride is solvated or suspended in at least one ethereal solvent, at least one hydrocarbon solvent, or a mixture thereof.

18. The method of claim 15, wherein metal tetradecahydroundecaborate salt comprises at least 80% ¹¹⁰B.

19. The method of claim 15, wherein metal tetradecahydroundecaborate salt comprises at least 95% ¹¹B

20. The method of claim 15, wherein metal tetradecahydroundecaborate salt comprises at least 95% ¹¹B.

21. A method of preparing isotopically enriched decaborane, the method comprising the steps of:
(a) providing isotopically enriched metal tetradecahydroundecaborate salt according the to method of any one of claims 14 to 20; and
(b) contacting the isotopically enriched metal tetradecahydroundecaborate salt with an oxidizing agent having an electrode potential of at least 0.6 volts at a temperature of between -10°C and 50°C under conditions conducive to oxidation of the metal tetradecahydroundecaborate salt.

22. A method of preparing isotopically enriched decaborane, the method comprising the steps of:
(a) providing isotopically enriched boric acid;
(b) contacting the isotopically enriched boric acid with an alcohol under conditions conducive to formation of an isotopically enriched borate;
(c) reducing the isotopically enriched borate with a metal aluminum hydride under conditions conducive to formation of isotopically enriched metal borohydride; and
(d) contacting a solution of the isotopically enriched metal borohydride with a compound of the formula, R-X or isotopically enriched BY₃(ligand), under conditions conducive to the formation of a metal tetradecahydroundecaborate salt, wherein
R is alkyl, alkenyl, or aralkyl;
X is fluoro, chloro, bromo, iodo, alkylsulfonate, or arylsulfonate;
Y is fluoro, chloro, or bromo; and
ligand is absent, an ether, an amine, or a pyridine; and
(e) contacting the isotopically enriched metal tetradecahydroundecaborate salt with an oxidizing agent having an electrode potential of at least 0.6 volts at a temperature of between -10°C and 50°C under conditions conducive to oxidation of the metal tetradecahydroundecaborate salt.

23. The method of claim 20 or claim 21, wherein the oxidizing agent is selected from Ag⁺²/H⁺, Au⁺³/H⁺, Ce⁺⁴/H, CeOH⁺³/H⁺, HClO⁻/H⁺, ClO₃⁻/H⁺, ClO₄⁻/H⁺, CO⁺³, Cr⁺⁴/H⁺, Fe(phenanthroline)₃⁺³/H⁺, IO₃⁻/H⁺, MnO₂/H⁺, NiO₂/H⁺, Np⁺⁴, O₂/H⁺, PbO₂⁻/H⁺, PbC₂/SO₄²⁻/H⁺, Pu⁺⁴, Pu⁺⁵, RuO₄, Ti⁺³, U⁺⁵, and V(OH)⁺.

24. The method of claim 22, wherein decaborane comprises at least 80% ¹⁰B.

25. The method of claim 22, wherein decaborane comprises at least 95% ¹⁰B

26. The method of claim 22, wherein decaborane comprises at least 95% ¹¹B.

## Patentansprüche

1. Verfahren zur Synthese von isotopisch angereichertem Metallborhydrid, wobei das Verfahren die folgenden Schritte umfasst:
(a) Bereitstellen von isotopisch angereicherter Borsäure;
(b) in-Kontakt-Bringen der isotopisch angereicherten Borsäure mit einem Alkohol, unter Bedingungen, die für die Bildung eines isotospisch angereicherten Borats zweckdienlich sind; und
(c) Reduzieren des isotopisch angereicherten Borats mit einem Metallaluminiumhydrid, unter Bedingungen, die für die Bildung von isotopisch angereichertem Metallborhydrid zweckdienlich sind,
wobei das isotopisch angereicherte Borat eine Verbindung mit der Formel I ist:
[(RO)₂B-O-]ₙ-R' I
wobei
jedes auftretende R unabhängig voneinander aus der Gruppe ausgewählt wird, die aus geradkettigen oder verzweigten Alkyl, Cycloalkyl, Cycloalkyl-Alkyl, Alkenyl, Aryl, Aralkyl, und Haloalkyl besteht, oder
zwei Gruppen R zusammengenommen eine α,ω-Alkylengruppe oder eine 1,2-Cycloalkylengruppe bilden, wobei jede davon optional mit einer oder mehreren Gruppen substituiert sein kann, die aus der Gruppe ausgewählt werden, die aus Alkyl, Alkenyl, Cycloalkyl, Cycloalkyl-Alkyl, Aryl, Aralkyl, und Alkoxy besteht;
n 1 oder 2 ist; und
R' aus der Gruppe ausgewählt wird, die aus Alkyl, Alkenyl, Aryl, Aralkyl, und Haloalkyl besteht, wenn n = 1, oder R' eine α,ω-Alkylengruppe oder eine 1,2-Cycloalkylengruppe ist, wobei jede davon optional mit einer oder mehreren Gruppen substituiert sein kann, die aus der Gruppe ausgewählt werden, die aus Alkyl, Alkenyl, Cycloalkyl, Cycloalkyl-Alkyl, Aryl, und Aralkyl besteht, wenn n = 2; oder
wobei das isotopisch angereicherte Borat eine Verbindung mit der Formel III ist: 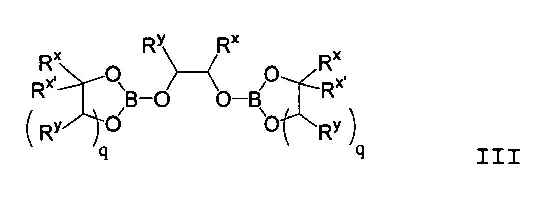 wobei
q 1 oder 2 ist; und
R^{x}, R^{x'}, und R^{y} bei jedem Auftreten unabhängig voneinander aus der Gruppe ausgewählt werden, die aus Wasserstoff, geradkettigen und verzweigten C₁₋₁₀-Alkyl, C₁₋₁₀-Alkoxy, und C₃₋₈-Cycloalkyl besteht, oder R^{x} und R^{y} zusammengenommen eine α,ω-Alkylengruppe bilden.

2. Verfahren nach Anspruch 1, wobei R^{x} und R^{y} aus der Gruppe ausgewählt werden, die aus Wasserstoff oder geradkettigen oder verzweigten C₁₋₄-Alkyl besteht.

3. Verfahren nach Anspruch 1, wobei der Veresterungsschritt umfasst, dass die isotopisch angereicherte Borsäure mit mindestens drei Äquivalenten von einem geradkettigen oder verzweigten C₁₋₁₀-Alkanol oder mit mindestens einem und einem halben (1,5) Äquivalent von einem C₂₋₁₀-Alkandiol in Kontakt gebracht wird.

4. Verfahren nach Anspruch 3, wobei der Veresterungsschritt umfasst, dass die isotopisch angereicherte Borsäure mit drei Äquivalenten von einem geradkettigen C₂₋₁₀-Alkanol oder mit mindestens einem und einem halben (1,5) Äquivalent von einem geradkettigen oder verzweigten 1,2-C₂₋₁₀-Alkandiol in Kontakt gebracht wird.

5. Verfahren nach Anspruch 1, wobei Wasser, das während des Veresterungsschrittes erzeugt wird, aus der Reaktionsmischung entfernt wird.

6. Verfahren nach Anspruch 1, wobei der Veresterungsschritt bei einer Temperatur von zwischen 95°C und 175°C durchgeführt wird.

7. Verfahren nach Anspruch 1, wobei der Reduktionsschritt umfasst, dass das Borat mit einer Mischung aus einem Metallaluminiumhydrid und mindestens einem Lösungsmittel in Kontakt gebracht wird.

8. Verfahren nach Anspruch 7, wobei mindestens ein Lösungsmittel aus Diethylether, Tetrahydrofuran, 1,3-Dioxolan, 1,4-Dioxan, 1,3-Dioxan, Methyl-tert-butylether, Dimethoxyethan, Diglyme, und Mischungen davon ausgewählt wird.

9. Verfahren nach Anspruch 8, wobei die Mischung mindestens ein zusätzliches Kohlenwasserstoff-Lösungsmittel umfasst, das aus Benzol, Cyclohexan, Methylcyclohexan, Toluol, Xylolen, geradkettigen und verzweigten C₅₋₁₀-Alkanen, Petrolethern, und Mischungen davon ausgewählt wird.

10. Verfahren nach Anspruch 1, wobei das isotopisch angereicherte Boran und das Metallaluminiumhydrid bei einer Temperatur von zwischen -50°C und 50°C in Kontakt gebracht werden und die Mischung dann auf eine Temperatur von zwischen 50°C und 150°C aufgeheizt wird.

11. Verfahren nach Anspruch 1, wobei die Borsäure mindestens 80% ¹⁰B umfasst.

12. Verfahren nach Anspruch 1, wobei die Borsäure mindestens 95% ¹⁰B umfasst.

13. Verfahren nach Anspruch 1, wobei die Borsäure mindestens 95% ¹¹B umfasst.

14. Verfahren zum Herstellen eines isotopisch angereicherten Metall-Tetradecahydroundecaborat-Salzes, wobei das Verfahren die folgenden Schritte umfasst:
(a) Bereitstellen eines isotopisch angereicherten Metallborhydrids nach einem Verfahren nach einem beliebigen der Ansprüche 1 bis 13; und
(b) in-Kontakt-Bringen einer Lösung des isotopisch angereicherten Metallborhydrids mit einer Verbindung mit der Formel R-X oder isotopisch angereichert BY₃(Ligand), unter Bedingungen, die für die Bildung von einem Metall-Tetradecahydroundecaborat-Salz zweckdienlich sind, wobei
R Alkyl, Alkenyl, oder Aralkyl ist;
X Fluor, Chlor, Brom, Jod, Alkylsufonat, oder Arylsulfonat ist;
Y Fluor, Chlor, oder Brom ist; und
Ligand nicht vorhanden, ein Ether, ein Amin, oder ein Pyridin ist.

15. Verfahren zum Herstellen eines isotopisch angereicherten Metall-Tetradecahydroundecaborat-Salzes, wobei das Verfahren die folgenden Schritte umfasst:
(a) Bereitstellen von isotopisch angereicherter Borsäure;
(b) in-Kontakt-Bringen der isotopisch angereicherten Borsäure mit einem Alkohol, unter Bedingungen, die für die Bildung eines isototisch angereicherten Borats zweckdienlich sind;
(c) Reduzieren des isotopisch angereicherten Borats mit einem Metallaluminiumhydrid, unter Bedingungen, die für die Bildung von isotopisch angereichertem Metallborhydrid zweckdienlich sind; und
(d) in-Kontakt-Bringen einer Lösung des isotopisch angereicherten Metallborhydrids mit einer Verbindung mit der Formel R-X oder isotopisch angereichert BY₃(Ligand), unter Bedingungen, die für die Bildung von einem Metall-Tetradecahydroundecaborat-Salz zweckdienlich sind, wobei
R Alkyl, Alkenyl, oder Aralkyl ist;
X Fluor, Chlor, Brom, Jod, Alkylsufonat, oder Arylsulfonat ist;
Y Fluor, Chlor, oder Brom ist; und
Ligand nicht vorhanden, ein Ether, ein Amin, oder ein Pyridin ist,
wobei das isotopisch angereicherte Metallborhydrid mit mindestens zwei Äquivalenten der Verbindung mit der Formel R-X in Kontakt gebracht wird, oder wobei das isotopisch angereicherte Metallborhydrid mit mindestens zwei Äquivalenten der isotopisch angereicherten Verbindung mit der Formel BY₃(Ligand) in Kontakt gebracht wird.

16. Verfahren nach einem beliebigen der Ansprüche 14 und 15, wobei das Metallborhydrid und die Verbindung mit der Formel R-X bei einer Temperatur von zwischen 50°C und 200°C in Kontakt gebracht werden, oder wobei das Metallborhydrid und die isotopisch angereicherte Verbindung mit der Formel BY₃(Ligand) bei einer Temperatur von zwischen 50°C und 200°C in Kontakt gebracht werden.

17. Verfahren nach einem beliebigen der Ansprüche 14, 15, und 16, wobei das Metallborhydrid in mindestens einem etherischen Lösungsmittel, mindestens einem Kohlenwasserstoff-Lösungsmittel, oder einer Mischung davon solvatisiert oder suspendiert ist.

18. Verfahren nach Anspruch 15, wobei das Metall-Tetradecahydroundecaborat-Salz mindestens etwa 80% ¹⁰B umfasst.

19. Verfahren nach Anspruch 15, wobei das Metall-Tetradecahydroundecaborat-Salz mindestens etwa 95% ¹⁰B umfasst.

20. Verfahren nach Anspruch 15, wobei das Metall-Tetradecahydroundecaborat-Salz mindestens etwa 95% ¹¹B umfasst.

21. Verfahren zum Herstellen von isotopisch angereichertem Decaboran, wobei das Verfahren die folgenden Schritte umfasst:
(a) Bereitstellen eines isotopisch angereicherten Metall-Tetradecahydroundecaborat-Salzes nach einem Verfahren nach einem beliebigen der Ansprüche 14 bis 20; und
(b) in-Kontakt-Bringen des isotopisch angereicherten Metall-Tetradecahydroundecaborat-Salzes mit einem Oxidationsmittel, das ein Elektrodenpotential von mindestens 0,6 Volt bei einer Temperatur von zwischen -10°C und 50°C aufweist, unter Bedingungen, die für die Oxidation des Metall-Tetradecahydroundecaborat-Salzes zweckdienlich sind.

22. Verfahren zum Herstellen von isotopisch angereichertem Decaboran, wobei das Verfahren die folgenden Schritte umfasst:
(a) Bereitstellen von isotopisch angereicherter Borsäure;
(b) in-Kontakt-Bringen der isotopisch angereicherten Borsäure mit einem Alkohol, unter Bedingungen, die für die Bildung eines isototisch angereicherten Borats zweckdienlich sind;
(c) Reduzieren des isotopisch angereicherten Borats mit einem Metallaluminiumhydrid, unter Bedingungen, die für die Bildung von isotopisch angereichertem Metallborhydrid zweckdienlich sind; und
(d) in-Kontakt-Bringen einer Lösung des isotopisch angereicherten Metallborhydrids mit einer Verbindung mit der Formel R-X oder isotopisch angereichert BY₃(Ligand), unter Bedingungen, die für die Bildung von einem Metall-Tetradecahydroundecaborat-Salz zweckdienlich sind, wobei
R Alkyl, Alkenyl, oder Aralkyl ist;
X Fluor, Chlor, Brom, Jod, Alkylsufonat, oder Arylsulfonat ist;
Y Fluor, Chlor, oder Brom ist; und
Ligand nicht vorhanden, ein Ether, ein Amin, oder ein Pyridin ist; und
(e) in-Kontakt-Bringen des isotopisch angereicherten Metall-Tetradecahydroundecaborat-Salzes mit einem Oxidationsmittel, das ein Elektrodenpotential von mindestens 0,6 Volt bei einer Temperatur von zwischen -10°C und 50°C aufweist, unter Bedingungen, die für die Oxidation des Metall-Tetradecahydroundecaborat-Salzes zweckdienlich sind.

23. Verfahren nach Anspruch 20 oder Anspruch 21, wobei das Oxidationsmittel aus Ag⁺²/H⁺, Au⁺³/H⁺, Ce⁺⁴/H, CeOH⁺³/H⁺, HClO⁻/H⁺, ClO₃⁻/H⁺, ClO₄⁻/H⁺, CO⁺³, Cr⁺⁴/H⁺, Fe(Phenenthrolin)₃⁺³/H⁺, IO₃⁻/H⁺, MnO₂/H⁺, NiO₂/H⁺ Np⁺⁴, O₂/H⁺, PbO₂⁻/H⁺, PbO₂/SO₄²⁻/H⁺, Pu⁺⁴, Pu⁺⁵, RuO₄, Ti⁺³, U⁺⁵, und V(OH)⁺ ausgewählt wird.

24. Verfahren nach Anspruch 22, wobei das Decaboran mindestens 80% ¹⁰B umfasst.

25. Verfahren nach Anspruch 22, wobei das Decaboran mindestens 95% ¹⁰B umfasst.

26. Verfahren nach Anspruch 22, wobei das Decaboran mindestens 95% ¹¹B umfasst.

## Revendications

1. Procédé de synthèse d'un borohydrure métallique enrichi de manière isotopique, le procédé comprenant les étapes consistant :
(a) à fournir de l'acide borique enrichi de manière isotopique ;
(b) à mettre en contact l'acide borique enrichi de manière isotopique avec un alcool dans des conditions propices à la formation d'un borate enrichi de manière isotopique ; et
(c) à réduire le borate enrichi de manière isotopique par un hydrure d'aluminium métallique dans des conditions propices à la formation de borohydrure métallique enrichi de manière isotopique,
dans lequel le borate enrichi de manière isotopique est un composé de la Formule I :
[(RO)₂B-O-]ₙ-R' I
où
chaque occurrence de R est indépendamment choisie dans le groupe constitué d'alkyle linéaire ou ramifié, de cycloalkyle, de cycloalkylalkyle, d'alcényle, d'aryle, d'aralkyle, et d'haloalkyle, ou
deux groupes R pris en combinaison forment un groupe α, ω-alkylène ou un groupe 1,2-cylcoalkylène dont chacun peut être éventuellement substitué par un ou plusieurs groupes choisi(s) dans le groupe constitué d'alkyle, d'alcényle, de cycloalkyle, de cycloalkylalkyle, d'aryle, d'aralkyle, et d'alcoxy ;
n est 1 ou 2 ; et
R' est choisi dans le groupe constitué d'alkyle, d'alcényle, d'aryle, d'aralkyle, et d'haloalkyle, lorsque n = 1, ou R' est un groupe α, ω-alkylène ou un groupe 1, 2-cylcoalkylène dont chacun peut être éventuellement substitué par un ou plusieurs groupes choisi(s) dans le groupe constitué d'alkyle, d'alcényle, de cycloalkyle, de cycloalkyle-alkyle, d'aryle, et d'aralkyle, lorsque n = 2 ;
ou
dans lequel le borate enrichi de manière isotopique est un composé de la Formule III : 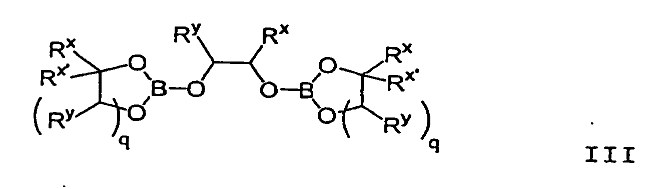 où
q est 1 ou 2 ; et
R^{x}, R^{x'}, et R^{y} sont indépendamment choisis à chaque occurrence dans le groupe constitué d'un atome d'hydrogène, d'alkyle en C₁₋₁₀ linéaire et ramifié, d'alkoxy en C₁₋₁₀, et de cycloalkyle en C₃₋₈, ou R^{x} et R^{y}, pris en combinaison forment un groupe α, ω-alkylène.

2. Procédé de la revendication 1, dans lequel R^{x} et R^{y} sont choisis dans le groupe constitué d'un atome d'hydrogène ou d'alkyle en C₁₋₄ linéaire ou ramifié.

3. Procédé de la revendication 1, dans lequel l'étape d'estérification comprend la mise en contact de l'acide borique enrichi de manière isotopique avec au moins trois équivalents d'un alcanol en C₁₋₁₀ linéaire ou ramifié ou au moins un et demi (1,5) équivalents d'un alcanediol en C₂₋₁₀.

4. Procédé de la revendication 3, dans lequel l'étape d'estérification comprend la mise en contact de l'acide borique enrichi de manière isotopique avec trois équivalents d'un alcanol en C₂₋₁₀ linéaire ou un et demi (1,5) équivalents de 1,2-alcanediol en C₂₋₁₀ linéaire ou ramifié.

5. Procédé de la revendication 1, dans lequel l'eau produite lors de l'étape d'estérification est éliminée du mélange réactionnel.

6. Procédé de la revendication 1, dans lequel l'étape d'estérification est effectuée à une température comprise entre 95°C et 175°C.

7. Procédé de la revendication 1, dans lequel l'étape de réduction comprend la mise en contact du borate avec un mélange d'un hydrure d'aluminium métallique et au moins un solvant.

8. Procédé de la revendication 7, dans lequel au moins un solvant est choisi parmi l'éther diéthylique, le tétrahydrofuranne, le 1,3-dioxolane, le 1,4-dioxane, le 1,3-dioxane, le méthyl-tert-butyléther, le diméthoxyéthane, le diglyme, et de leurs mélanges.

9. Procédé de la revendication 8, dans lequel le mélange comprend au moins un solvant d'hydrocarbure supplémentaire choisi parmi le benzène, le cyclohexane, le méthylcyclohexane, le toluène, les xylènes, les alcanes en C₅₋₁₀ linéaires et ramifiés, les éthers de pétrole, et leurs mélanges.

10. Procédé de la revendication 1, dans lequel le borane enrichi de manière isotopique et l'hydrure d'aluminium métallique sont mis en contact à une température comprise entre -50°C et 50°C et le mélange est ensuite chauffé à une température comprise entre 50°C et 150°C.

11. Procédé de la revendication 1, dans lequel l'acide borique comprend au moins 80% de ¹⁰B.

12. Procédé de la revendication 1, dans lequel l'acide borique comprend au moins 95% de ¹⁰B.

13. Procédé de la revendication 1, dans lequel l'acide borique comprend au moins 95% de ¹¹B.

14. Procédé de préparation de sel de tétradécahydroundécaborate métallique enrichi de manière isotopique, le procédé comprenant les étapes consistant :
(a) à fournir du borohydrure métallique enrichi de manière isotopique selon le procédé de l'une quelconque des revendications 1 à 13 ; et
(b) à mettre en contact une solution de borohydrure métallique enrichi de manière isotopique avec un composé de la formule, R-X ou du BY₃(ligand) enrichi de manière isotopique, dans des conditions propices à la formation d'un sel de tétradécahydroundécaborate métallique, dans lequel
R est un alkyle, alcényle, ou aralkyle ;
X est un fluoro, chloro, bromo, iodo, alkylsulfonate, ou arylsulfonate ;
Y est un fluoro, chloro, ou bromo ; et
le ligand est absent, est un éther, une amine, ou une pyridine.

15. Procédé de préparation de sel de tétradécahydroundécaborate métallique enrichi de manière isotopique, le procédé comprenant les étapes consistant :
(a) à fournir de l'acide borique enrichi de manière isotopique ;
(b) à mettre en contact l'acide borique enrichi de manière isotopique avec un alcool dans des conditions conduisant à la formation d'un borate enrichi de manière isotopique ;
(c) à réduire du borate enrichi de manière isotopique par un hydrure d'aluminium métallique dans des conditions propices à la formation de borohydrure métallique enrichi de manière isotopique ; et
(d) à mettre en contact une solution du borohydrure métallique enrichi de manière isotopique avec un composé de la formule, R-X ou BY₃(ligand) enrichi de manière isotopique, dans des conditions propices à la formation d'un sel de tétradécahydroundécaborate métallique, dans lequel
R est un alkyle, alcényle, ou aralkyle ;
X est un fluoro, chloro, bromo, iodo, alkylsulfonate, ou arylsulfonate ;
Y est un groupe fluoro, chloro, ou bromo ; et
le ligand est absent, est un éther, une amine, ou une pyridine,
dans lequel le borohydrure métallique enrichi de manière isotopique est mis en contact avec au moins deux équivalents du composé de la formule, R-X ou dans lequel le borohydrure métallique enrichi de manière isotopique est mis en contact avec au moins deux équivalents du composé enrichi de manière isotopique de la formule, BY₃(ligand).

16. Procédé de l'une quelconque des revendications 14 et 15, dans lequel le borohydrure métallique et le composé de formule, R-X sont mis en contact à une température comprise entre 50°C et 200°C ou dans lequel le borohydrure métallique et le composé enrichi de manière isotopique de la formule, BY₃(ligand) sont mis en contact à une température comprise entre 50°C et 200°C.

17. Procédé de l'une quelconque des revendications 14, 15, et 16, dans lequel le borohydrure métallique est solvaté ou mis en suspension dans au moins un solvant éthéré, au moins un solvant hydrocarboné, ou leur mélange.

18. Procédé de la revendication 15, dans lequel le sel de tétradécahydroundécaborate métallique comprend au moins environ 80% de ¹⁰B.

19. Procédé de la revendication 15, dans lequel le sel de tétradécahydroundécaborate métallique comprend au moins environ 95% de ¹⁰B.

20. Procédé de la revendication 15, dans lequel sel de tétradécahydroundécaborate métallique comprend au moins environ 95% de ¹¹B.

21. Procédé de préparation de décaborane enrichi de manière isotopique, le procédé comprenant les étapes consistant :
(a) à fournir un sel métal de tétradécahydroundécaborate enrichi de manière isotopique selon le procédé de l'une quelconque l'une des revendications 14 à 20 ; et
(b) à mettre en contact le sel de tétradécahydroundécaborate métallique enrichi de manière isotopique avec un agent oxydant ayant un potentiel d'électrode d'au moins 0,6 volts à une température comprise entre -10°C et 50°C dans des conditions propices à l'oxydation du sel de tétradécahydroundécaborate métallique.

22. Procédé de préparation de décaborane enrichi de manière isotopique, le procédé comprenant les étapes consistant :
(a) à fournir de l'acide borique enrichi de manière isotopique ;
(b) à mettre en contact l'acide borique enrichi de manière isotopique avec un alcool dans des conditions propices à la formation de borate enrichi de manière isotopique ;
(c) à réduire le borate enrichi de manière isotopique par l'hydrure d'aluminium métallique dans des conditions propices à la formation de borohydrure métallique enrichi de manière isotopique ; et
(d) à mettre en contact une solution du borohydrure métallique enrichi de manière isotopique avec un composé de la formule, R-X ou BY₃(ligand) enrichi de manière isotopique, dans des conditions propices à la formation d'un sel de tétradécahydroundécaborate métallique, dans lequel
R est un alkyle, alcényle, ou aralkyle ;
X est un fluoro, chloro, bromo, iodo, alkylsulfonate, ou arylsulfonate ;
Y est un fluoro, chloro, ou bromo ; et
le ligand est absent, ou est un éther, une amine, ou une pyridine ; et
(e) à mettre en contact le sel de tétradécahydroundécaborate métallique enrichi de manière isotopique avec un agent oxydant ayant un potentiel d'électrode d'au moins 0,6 volt à une température comprise entre -10°C et 50°C dans des conditions propices à l'oxydation du sel de tétradécahydroundécaborate métallique.

23. Procédé de la revendication 20 ou de la revendication 21, dans lequel l'agent oxydant est choisi parmi Ag⁺²/H⁺, Au⁺³/H⁺, Ce⁺/H, CeOH⁺³/H⁺, HClO⁻/H⁺, ClO₃⁻/H⁺, ClO₄⁻\H⁺, CO⁺³, Cr⁺⁴/H⁺, Fe(phénanthroline)₃⁺³/H⁺, IO₃⁻/H⁺, MnO₂/H⁺, NiO₂/H⁺, Np⁺⁴, O₂/H⁺, PbO₂⁻/H⁺, PbO₂/SO₄²⁻/H⁺, Pu⁺⁴, pu⁺⁵, RuO₄, Ti⁺³, U⁺⁵, et V(OH)⁺.

24. Procédé de la revendication 22 dans lequel le décaborane comprend au moins 80% de ¹⁰B.

25. Procédé de la revendication 22 dans lequel le décaborane comprend au moins 95% de ¹⁰B.

26. Procédé de la revendication 22, dans lequel le décaborane comprend au moins 95% de ¹¹B.
